Europäisches Patentamt

European Patent Office

Office européen des brevets

(11) Veröffentlichungsnummer: **0 244 569**
**B1**

(12) **EUROPÄISCHE PATENTSCHRIFT**

(45) Veröffentlichungstag der Patentschrift:
25.04.90

(51) Int. Cl.⁴: **F23L 15/02**

(21) Anmeldenummer: **87101943.6**

(22) Anmeldetag: **12.02.87**

(54) **Verfahren und Vorrichtung zum Betreiben eines Dampferzeugers.**

(30) Priorität: **03.05.86 DE 3615125**

(43) Veröffentlichungstag der Anmeldung:
**11.11.87 Patentblatt 87/46**

(45) Bekanntmachung des Hinweises auf die Patenterteilung:
**25.04.90 Patentblatt 90/17**

(84) Benannte Vertragsstaaten:
**AT BE ES FR GB GR IT NL**

(56) Entgegenhaltungen:
**US-A- 1 970 534**
**US-A- 3 155 154**

(73) Patentinhaber: **Lentjes BWE Energietechnik GmbH,
Daniel-Goldbach-Str. 19, D-4030 Ratingen(DE)**

(72) Erfinder: **Neukam, Hans Dipl.-Ing, Helenenstrasse 46,
D-4330 Mülheim a.d. Ruhr(DE)**

(74) Vertreter: **König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1(DE)**

**Beschreibung**

Die Erfindung betrifft ein Verfahren zum Betreiben eines Dampferzeugers, bei dem mittels der heißen Rauchgase Luft im Gegenstrom durch einen in der Verbrennungsanlage angeordneten Luftvorwärmer aufgeheizt und die aufgeheizte Luft vor dem Eindüsen in die Verbrennungsanlage mit rezirkulierendem Rauchgas gemischt wird, sowie eine Vorrichtung zum Durchführen des Verfahrens.

Um eine bessere Verbrennung und einen höheren Wirkungsgrad zu erreichen, ist es bekannt, die einer Verbrennungsanlage bzw. Befeuerung eines Dampferzeugers zugeführte Verbrennungsluft vor dem Eindüsen in den Feuerraum zu erwärmen. Das Erwärmen läßt sich verfahrensökonomisch mit z.B. aus rotierenden Wärmetauschelementen mit feststehenden Hauben bzw. Kanälen oder aus feststehenden Wärmetauschelementen mit rotierenden Hauben bzw. Kanälen bestehenden Wärmetauschern durchführen; es werden nämlich die heißen Rauchgase der Verbrennungsanlage zum Aufheizen der Wärmetauscherelemente des Luftvorwärmers benutzt und die gespeicherte Wärme an die im Gegenstromprinzip mit einem vertikalen Strom durch den Luftvorwärmer hindurchgeführte Verbrennungsluft abgegeben.

Bedingt durch das natürliche Druckgefälle der mit unterschiedlichen Temperaturen im Gegenstrom den Wärmetauscher passierenden Ströme des heißen Rauchgases und der sehr viel kälteren Luft, läßt sich jedoch ein nachteiliger Schlupf der geförderten Luft zur Rauchgasseite nicht verhindern; denn das Druckniveau der Luft ist systembedingt immer höher als das Druckniveau der Rauchgase, so daß zumindest ein Teil der Luft stests zur Rauchgasseite wandert. Dabei geht sehr viel Luft verloren, die mit entsprechend größer ausgelegten Gebläsen nachgefördert werden muß; gleichermaßen ist das durch die Luft vergrößerte Volumen der Rauchgase mit mehr Aufwand zu befördern. Damit sich die Leckagen zumindest in niedrigen Grenzen halten lassen, werden mechanische Sperren eingebaut.

Bei einem durch die US-Patentschrift 1 970 534 bekanntgewordenen Dampferzeuger wird der Schlupf gereinigter Luft zur Rauchgasseite in einem Luftvorwärmer der beschriebenen Art dadurch vermieden, daß Ströme gereinigten Gases mit unterschiedlich hohem, jedoch über dem Druck der heißen Rauchgase liegenden Drücken als Sperrgas in den Luftvorwärmer eingebracht werden. Zu diesem Zweck befinden sich im Reingasstrom des Luftvorwärmers ober- und unterhalb der rotierenden Wärmetauscherelemente angeordnete Kammern, die die Sperrgase gezielt durch die Wärmetauscherelemente hindurchleiten.

Aus wirtschaftlichen Gründen ist beim Betrieb der Dampferzeuger eine Rauchgasrezirkulation bekannt, d.h., ein Teil des gereinigten entstaubten Rauchgases wird noch vor dem Kamin abgezweigt, zur Verbrennungsanlage zurückgeführt, mit der Luft gemischt und danach in den Feuerraum der Verbrennungsanlage gedüst. Das vorherige Mischen bzw. Homogenisieren der beiden unterschiedlichen Medien, von denen das Rauchgas gegenüber der Luft sehr zäh ist, erfordert einen besonderen, sehr aufwendigen und teuren Mischer.

Der Erfindung liegt die Aufgabe zugrunde, die vorgenannten Nachteile beim Betrieb bekannter Dampferzeuger insbesondere durch Maßnahmen am Wärmetauscher zu vermeiden.

Diese Aufgabe wird bei einem Verfahren der eingangs erwähnten Art Erfindungsgemäß dadurch gelöst, daß der Massenstrom des rezirkulierenden Rauchgases dem Luftvorwärmer zwischen dem Kanal für den Rauchgasstrom und dem Kanal für den Luftstrom zugeführt wird sowie ein mengenmäßig regelbarer Teilstrom des rezirkulierenden Rauchgases in den Luftstrom gelenkt und mit dem Luftstrom vermischt wird. Die Erfindung nutzt in überraschend einfacher Weise das im System vorhandene Druckgefälle aus, indem an den Ort, wo bei den bekannten Anlagen die Luft aufgrund des hohen Druckes in den Rauchgasstrom wandert, nunmehr eine Rauchgasstrom aus vorzugsweise entstaubten rezirkulierenden Rauchgas gelegt wird, wobei das rezirkulierende Rauchgas einen z.B. durch das Rezirkulationsgebläse regelbaren geringen Überdruck zum angrenzenden Luftstrom aufweist. Mit dieser Maßnahme stellen sich gleich mehrere Vorteile ein; denn das rezirkulierende Rauchgas sperrt erstens die Luft gegen den ungereinigten Rauchgasstrom ab und verhindert somit Luftverluste, da die Luft nicht mehr in den Rauchgasstrom gelangt.

Zweitens läßt sich sogleich im Luftkanal ein homogenisierendes Mischen des Luftstromes mit dem vorzugsweise in den Luftstrom hinein querbeschleunigten Teilstrom des rezirkulierenden Rauchgases erreichen, so daß kein besonderer Mischer mehr benötigt wird. Das beispielsweise durch Lenk- bzw. Leitflächen bewirkte Querbeschleunigen des in den Luftstrom umgelenkten Teilstromes, führt zu einem Verwirbeln mit dem Luftstrom und damit zu einem besseren Mischeffekt. Der zwischengeschaltete rezirkulierende Rauchgasstrom gewährleistet damit sowohl eine konstante Sperrwirkung, die auch nicht nachläßt, wenn die regelbare Menge des in den Luftstrom umgelenkten Teilstromes des rezirkulierenden Rauchgases vergrößert oder verkleinert wird, was z.B. abhängig insbesondere vom $CO_2$-Gehalt der Verbrennungsrückstände geregelt werden kann, als auch ein Mischen des Gases mit der Luft. Das Rezirkulationsgas läßt sich als im Luftvorwärmer integriertes Misch- und Abdichtsystem einsetzen.

Ein weiterer Vorteil läßt sich erreichen, wenn der rezirkulierende Rauchgasstrom dem Luftvorwärmer an der kalten Seite zugeführt wird. In diesem Fall tritt neben dem Mischen und Sperren nämlich noch der Effekt ein, daß durch das gegenüber der Luft heißere rezirkulierende Rauchgas die Luft schon vor dem Eintritt in den Luftvorwärmer vorgewärmt bzw. -geheizt wird und somit das Temperaturniveau der zur Befeuerung geförderten Verbrennungsluft höher, der Wirkungsgrad der Befeuerung besser ist. Grundsätzlich läßt sich der rezirkulierende Rauchgasstrom dem Luftvorwärmer jedoch auch an der heißen Seite, d.h. von oben, oder sowohl von oben als auch von unten zuführen.

Die im Luftstromkanal des Luftvorwärmers erzeugte, aus rezirkulierendem Rauchgas und Luft gemischte Verbrennungsluft läßt sich vorteilhaft in einen Wirbelschichtreaktor speisen, der sich wegen seines günstigen Wärmetausches und seiner verhältnismäßig einfachen Konstruktion besonders als Feuerung für die Dampferzeugung eignet. Der Wirbelschichtreaktor läßt sich mit den unterschiedlichsten, insbesondere auch minderwertigen Brennstoffen mit hohem Asche- und Schwefelgehalt wirtschaftlich betreiben. Die Schwefelemission wird dabei durch Einspeisen von Kalkstein, Kalk oder Dolomit in die Wirbelschicht zum stabilen Abbinden des Schwefels gering gehalten. Eine vergleichsweise niedrige Verbrennungstemperatur von 800 bis 900 °C gewährleistet zudem sehr niedrige $NO_x$-Gehalte im Abgas.

Eine Vorrichtung zum Durchführen des Verfahrens kann eine dem Luftstromkanal benachbart angeordnete Leitung für das rezirkulierende Rauchgas aufweisen, die mit einer regelbaren Auslaßöffnung an den Luftstromkanal angeschlossen ist. Die Leitung für das rezirkulierend zugeführte Rauchgas kann ein Kanal beliebiger Art sein; vorteilhaft läßt sie sich als zylindrisches Rohr mit einem zumindest der Längenabmessung des Luftstromkanals entsprechenden endseitigen Rauchgasverteiler ausbilden und die Auslaßöffnung läßt sich knapp unterhalb und/oder oberhalb der Wärmetauschelemente des Wärmetauschers anordnen und mit einer regelbaren Klappe verschließen. Zur spaltabhängigen Mengenregelung kann die Klappe z.B. motorbetrieben mehr oder weniger verstellt und damit der Durchflußquerschnitt der Auslaßöffnung des Rauchgasverteilers, beispielsweise ein am Ende des Rohres angebrachter Kasten beeinflußt werden. Im Rauchgasverteiler können beispielsweise Lenk- und Leitflächen oder Schlitzdüsen angeordnet sein und das Umlenken sowie Verteilen des geregelt über die Klappeneinstellung in den Luftkanal einströmenden Rauchgas-Teilstromes unterstützen.

Die Erfindung wird nachfolgend anhand eines in der Zeichnung dargestellten Ausführungsbeispiels des näheren erläutert. In der Zeichnung zeigen:

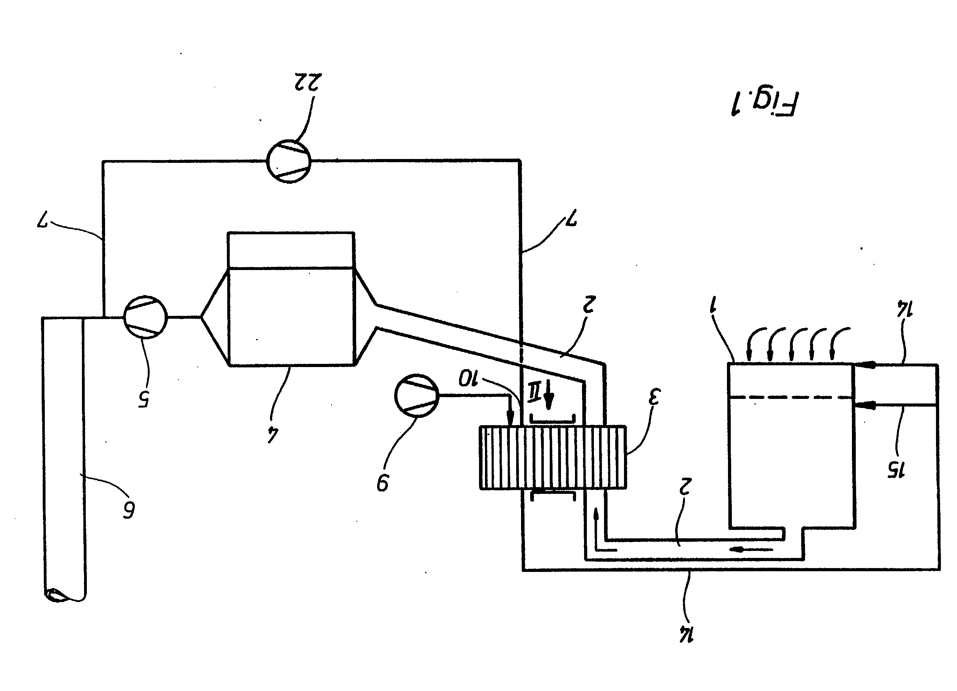

Fig. 1 als schematisches Fließschema eine Verbrennungsanlage mit einer Sperre aus Rezirkulationsgas in einem Luftvorwärmer;

Fig. 2 als Einzelheit eine Draufsicht auf einen Luftvorwärmer, in Pfeilrichtung II gesehen, schematisch dargestellt; und

Fig. 3 einen Querschnitt eines Luftvorwärmers gemäß Fig. 2, schematisch dargestellt.

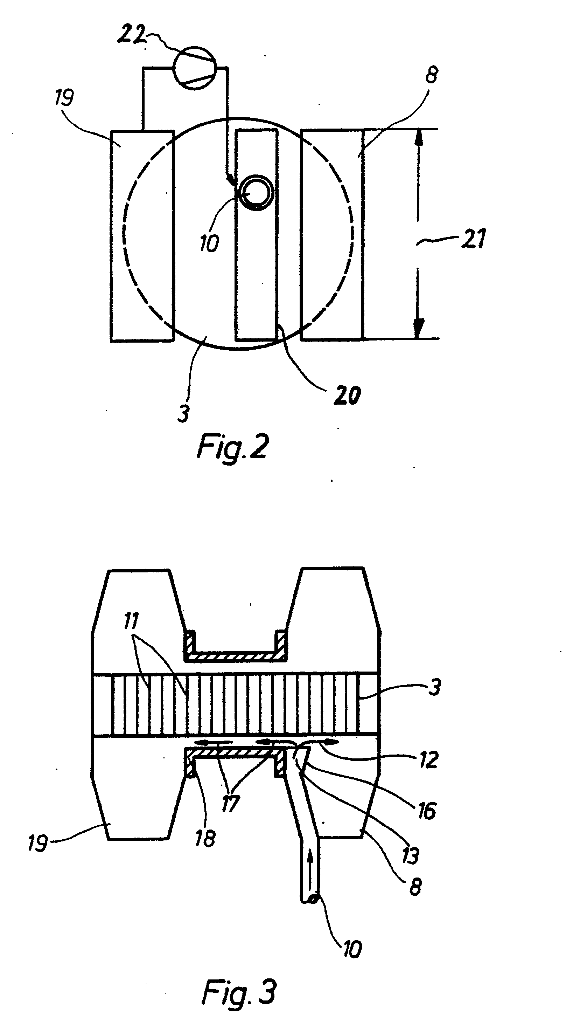

Von einer Befeuerung bzw. Verbrennungsanlage 1 eines Dampferzeugers führt eine Leitung 2 für heiße ungereinigte Rauchgase zu einem Luftvorwärmer 3 und einem der kalten Seite des Luftvorwärmers nachgeschalteten Elektrofilter 4, in dem die Rauchgase gereinigt werden, bevor sie hinter einem für den nötigen Saugzug sorgenden Gebläse 5 über einen Kamin 6 in die Atmosphäre abgeleitet werden. In einer von der Leitung 2 zwischen dem Saugzuggebläse 5 und dem Kamin 6 abzweigenden Rezirkulationsgasleitung 7 wird mittels eines Rezirkulationsgebläses 22 ein Teil des gereinigten Rauchgases in den Luftvorwärmer 3 geleitet, und zwar in einem benachbart zu einem Kanal 8 für die von einem Gebläse 9 von unten im Gegenstrom zu den heißen Rauchgasen in der Leitung 2 durch den Luftvorwärmer 3 hindurchgeführten Luft angeordneten Rohr 10 (vgl. Fig. 3).

Das Rezirkulationsgas wird im Rohr 10 bis knapp unterhalb von Wärmetauschelementen 11 des Luftvorwärmers 3 geführt und eine Teilmenge des gereinigten Rauchgases gemäß Pfeilrichtung 12 über eine Auslaßöffnung 13 des Rohres 10 querbeschleunigt in den Luftstrom im Kanal 8 umgelenkt, wo sich das gereinigte rezirkulierende Rauchgas mit der Luft vermischt, die danach den Luftvorwärmer 3 durchströmt und anschließend über Verbrennungsluftleitungen 14 und 15 der Befeuerung 1 zugeführt wird. Die in den Luftstrom-Kanal 8 umgelenkte Menge des rezirkulierenden Rauchgasstromes wird mittels einer verstellbaren Klappe 16 geregelt verändert. Der nicht in den Lufstrom-Kanal 8 umgelenkte Teil der rezirkulierenden Rauchgase strömt gemäß Pfeil 17 unterhalb eines Zwischenelements 18, das den Luftstromkanal 8 von einem Rauchgasstromkanal 19 trennt bzw. absperrt, in Richtung auf den mit Abstand parallel vom Luftstrom-Kanal 8 angeordneten Kanal 19 für die zum Aufheizen der Wärmetauschelemente 11 in den Luftvorwärmer 3 geleiteten heißen ungereinigten Rauchgase. Das sich in einem am Ende des Rohres 10, d.h. benachbart zum Luftvorwärmer 3 angeordneten Rauchgasverteiler 20 über die gesamte Länge 21 des Luftstromkanals 8 verteilende Rezirkulationsgas wirkt als Sperre zwischen dem Luftstrom im Kanal 8 und dem Rauchgasstrom im Kanal 19 und verhindert Leckagen der Luft zur ungereinigten Rauchgasseite die in Richtung auf den Kanal 19 der ungereinigten Rauchgase wirkende Sperre des Rezirkulationsgases hält die gegenüber dem Strom der ungereinigten Rauchgase einen höheren Druck aufweisende Luft davon ab, in den Strom der ungereinigten Rauchgase zu wandern.

## Patentansprüche

1. Verfahren zum Betreiben eines Dampferzeugers, bei dem mittels der heißen Rauchgase Luft im Gegenstrom durch einen in der Verbrennungsanlage angeordneten Luftvorwärmer aufgeheizt und die aufgeheizte Luft vor dem Eindüsen in die Verbrennungsanlage mit rezirkulierendem Rauchgas gemischt wird, dadurch gekennzeichnet, daß der Massenstrom des rezirkulierenden Rauchgases dem Luftvorwärmer zwischen dem Kanal für den Rauchgasstrom und dem Kanal für den Luftstrom zugeführt wird sowie ein mengenmäßig regelbarer Teilstrom des rezirkulierenden Rauchgases in den Luftstromkanal gelenkt und mit dem Luftstrom vermischt wird.

2. Verfahren nach Anspruch 1, dadurch gekennzeichnet, daß der rezirkulierende Rauchgasstrom dem Luftvorwärmer an der kalten Seite zugeführt wird.

3. Verfahren nach Anspruch 1 oder 2, dadurch gekennzeichnet, daß entstaubtes rezirkulierendes Rauchgas zugeführt wird.

4. Verfahren nach einem oder mehreren der Ansprüche 1 bis 3, dadurch gekennzeichnet, daß der Teilstrom des rezirkulierenden Rauchgases beim Umlenken in den Luftstrom querbeschleunigt wird.

5. Verfahren nach einem oder mehreren der Ansprüche 1 bis 4, dadurch gekennzeichnet, daß bis ca. 30 % rezirkulierendes Rauchgas zugeführt wird.

6. Verfahren nach einem oder mehreren der Ansprüche 1 bis 5, dadurch gekennzeichnet, daß ein Wirbelschichtreaktor mit der im Luftstromkanal aus rezirkulierendem Rauchgas und Luft gemischter Verbrennungsluft gespeist wird.

7. Vorrichtung zum Durchführen des Verfahrens nach Anspruch 1, mit einem in einer Verbrennungsanlage angeordneten, Kanäle für im Gegenstrom hindurchgeführte heiße Rauchgase und Luft aufweisenden Luftvorwärmer und einer in den Luftvorwärmer führenden Leitung für rezirkulierende Rauchgase, dadurch gekennzeichnet, daß die Leitung (10) für das rezirkulierende Rauchgas benachbart zu dem Luftstromkanal (8) angeordnet und mit einer regelbaren Auslaßöffnung (13) an den Luftstromkanal (8) anschließbar ist.

8. Vorrichtung nach Anspruch 7, dadurch gekennzeichnet, daß die Rauchgasleitung (10) als zylindrisches Rohr mit einem zumindest der Längenabmessung (21) des Luftstromkanals (8) entsprechenden endseitigen Rauchgasverteiler (20) ausgebildet ist und die Auslaßöffnung (13) knapp unterhalb und/oder oberhalb der Wärmetauschelemente (11) des Wärmetauschers (3) angeordnet und mit einer verstellbaren Klappe (16) verschließbar ist.

## Claims

1. A process for operating a steam generator in which air is heated by means of the hot flue gases in countercurrent flow through an air pre-heater arranged in the furnace plant and the heated air is mixed with recirculating flue gas before being injected into the furnace plant characterised in that the bulk of the recirculating flue gas is supplied to the air pre-heater between the flue gas passage and the air passage and a quantitatively regulable sub-stream of the recirculating flue gas is directed into the air passage and mixed with the air stream.

2. A process according to claim 1, characterised in that the recirculating flue gas stream is supplied to the air pre-heater at the cold side.

3. A process according to claim 1 or claim 2, characterised in that recirculating flue gas that has been freed from dust is supplied.

4. A process according to any one or more of claims 1 to 3, characterised in that the recirculating flue gas sub-stream is accelerated transversely as it is deflected into the air stream.

5. A process according to any one or more of claims 1 to 4, characterised in that up to about 30% of recirculating flue gas is supplied.

6. A process according to any one or more of claims 1 to 5, characterised in that a fluidised bed reactor is fed with combustion air made by mixing recirculating flue gas and air in the air passage.

7. Apparatus for carrying out the process according to claim 1, comprising an air pre-heater arranged in a furnace plant and having passages for passing hot flue gases and air in countercurrent through it, and a line for recirculating flue gases leading into the air pre-heater characterised in that the recirculating flue gas line (10) is arranged adjacent to the air passage (8) and can be connected to the air passage (8) by a controllable outlet opening (13).

8. Apparatus according to claim 7, characterised in that the flue gas line (10) is in the form of a cylindrical pipe with a flue gas distributor (20) at its end corresponding in length to at least the length (21) of the air passage (8), and the outlet opening (13) is arranged closely beneath and/or above the heat exchange elements (11) of the heat exchanger (3) and can be closed with an adjustable flap (16).

## Revendications

1. Procédé pour la conduite d'un générateur de vapeur, dans lequel les fumées chaudes sont utilisées pour préchauffer de l'air circulant à contre courant dans un préchauffeur d'air monté dans l'installation de combustion et dans lequel l'air préchauffé est, avant son injection dans l'installation de combustion, mélangé aux fumées recyclées, caractérisé en ce que le courant massif des fumées recyclées est introduit dans le préchauffeur d'air entre le conduit destiné au courant de fumées et le conduit, destiné au courant d'air et qu'un courant partiel de fumées recyclées de débit réglable est envoyé dans le conduit destiné au courant d'air et mélangé au courant d'air.

2. Procédé selon la revendication 1, caractérisé en ce que le courant de fumées recyclées est amené au préchauffeur d'air du côté froid.

3. Procédé selon l'une des revendications 1 ou 2, caractérisé en ce que les fumées recyclées amenées au préchauffeur d'air sont débarrassées de poussières.

4. Procédé selon une ou plusieurs des revendications 1 à 3, caractérisé en ce que le courant partiel de fumées reyclées est soumis à une accélération transversale au moment de son envoi dans le courant d'air.

5. Procédé selon une ou plusieurs des revendications 1 à 4, caractérisé en ce que la proportion des fumées recyclées peut atteindre 30% environ.

6. Procédé selon une ou plusieurs des revendications 1 à 5, caractérisé à ce qu'un réacteur à couche tourbillonnaire est alimenté par l'air de combustion mixte résultant du mélange, dans le conduit destiné au courant d'air, des fumées recyclées et de l'air.

7. Dispositif pour l'application du procédé selon la revendication 1, qui comporte un préchauffeur d'air, monté dans une installation de combustion et comportant des conduits pour des fumées chaudes et de l'air circulant à contre-courant et une canalisation aboutissant au préchauffeur d'air et destinée aux fumées recyclées, caractérisé en ce que la conduite (10) destinée aux fumées recyclées est située à proximité du conduit (8) destiné au courant d'air et peut être reliée au conduit destiné au courant d'air par une ouverture de sortie réglable (13).

8. Dispositif selon la revendication 7, caractérisé en ce que la conduite (10) destinée aux fumées est un tube cylindrique comportant un répartiteur de fumées (20), situé du côté de l'extrémité, qui correspond au moins à la dimension longitudinale (21) du conduit destiné au courant d'air et que l'ouverture de sortie (13) se trouve juste au-dessous et/ou au-dessus des éléments (11) d'échange de chaleur de l'échangeur de chaleur (3) et peut être fermée par un clapet déplaçable (16).

Fig.1

Fig.2

Fig. 3